# EUROPEAN PATENT SPECIFICATION

(11) **EP 3 417 651 B1**
(45) Date of publication and mention of the grant of the patent: **25.08.2021**
(21) Application number: 17765732.7
(22) Date of filing: 03.03.2017
(51) Int. Cl.: H04W 36/04, H04W 36/00, H04W 52/14, H04W 52/24, H04W 52/50

(54) **METHODS, USER EQUIPMENT AND COMMUNICATIONS CONTROLLER FOR MANAGING CONNECTIONS IN A WIRELESS COMMUNICATIONS SYSTEM**
VERFAHREN, ENDGERÄT UND KOMMUNICATIONS-CONTROLLER ZUR VERWALTUNG VON VERBINDUNGEN IN EINEM DRAHTLOSKOMMUNIKATIONSSYSTEM
PROCÉDÉS, ÉQUIPEMENT DE L'UTILISATEUR ET CONTRÔLEUR DE COMUNICATIONS DE GESTION DE CONNEXION DANS SYSTÈME DE COMMUNICATION SANS FIL

(30) Priority: 16.03.2016 US 201615072078
(43) Date of publication of application: 26.12.2018
(73) Proprietor: Huawei Technologies Co., Ltd., Longgang District Shenzhen, Guangdong 518129 (CN)
(72) Inventor: TENNY, Nathan Edward, Poway, CA 92064 (US); STIRLING-GALLACHER, Richard, Shenzen Guangdong 518129 (CN); ZHANG, Lili, Beijing 100089 (CN)
(74) Representative: Körber, Martin Hans
(86) International application number: PCT/CN2017/075629
(87) International publication number: WO 2017/157190

(56) References cited:
- WO-A1-2009/022948
- WO-A1-2011/075181
- CN-A- 1 777 332
- CN-A- 101 399 632
- CN-A- 103 702 432
- US-A1- 2011 105 121
- US-A1- 2012 044 870

## Description

### TECHNICAL FIELD

The present disclosure relates generally to digital communications, and more particularly to methods, user equipment and communications controller for managing connections in a wireless communications system.

### BACKGROUND

High latency is generally undesirable in wireless communications systems. As an example, high latency during the establishment of a connection between a mobile device and a communications controller can lead to service interruptions, dropped calls, lost data, pauses, glitches, and so on, that result in an unpleasant experience. In addition, in environments with high mobility such as small cell network deployments, ultra-dense networks (UDNs), and the like, managing a connection (e.g., handover, reconfiguring, establishing, and so on) may occupy a significant fraction of the connection's lifetime, so any delay in this process has a magnified effect on the user experience. Therefore, it is advantageous to minimize the latency involved in the management of a connection. US 2011/105121 A1 discloses a scheme for handover in a wireless communication network. Handover is initiated when the signal quality falls below a predetermined value. Random access serves as an uplink procedure to enable the UE to make handover from a first base station (eNodeB) to a suitable second base station (eNodeB). In the disclosure, random access parameters are exchanged between second and first base station before said first base station signals said random access parameters to said user equipment.

### SUMMARY OF THE DISCLOSURE

Example embodiments provide methods, user equipment and communications controller for managing connections in a wireless communications system. The present invention is defined by a method for digital communications according to independent claim 1, another method for digital communications according to independent claim 8, a user equipment, UE, adapted to digitally communicate according to independent claim 11 and a communications controller adapted to digitally communicate according to independent claim 12.

Practice of the foregoing embodiments enables a reduction in latency incurred in the managing of a connection by providing a resource allocation and an initial transmit power level, thereby eliminating (or reducing) the latency involved in the determining thereof.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1A illustrates an example wireless communications system;
Figure 1B illustrates an intermediate stage of a handover in wireless communications system;
Figure 1C illustrates a final stage of a handover in wireless communications system;
Figure 2A illustrates first example wireless communications system highlighting dual connectivity;
Figure 2B illustrates a second example wireless communications system highlighting dual connectivity;
Figure 3 illustrates message exchange diagram of a prior art handover procedure;
Figure 4 illustrates a message exchange diagram of an example handover procedure, highlighting latency reducing techniques according to example embodiments described herein;
Figure 5A illustrates a flow diagram of example operations occurring in a UE as the UE participates in a handover operation according to example embodiments described herein;
Figure 5B illustrates a flow diagram of example operations occurring in a source eNB as the source eNB participates in a handover operation according to example embodiments described herein;
Figure 5C illustrates a flow diagram of example operations occurring in a target eNB as the target eNB participates in a handover operation according to example embodiments described herein;
Figure 6A illustrates a flow diagram of first example operations occurring in a UE participating in determining uplink path loss according to example embodiments described herein;
Figure 6B illustrates a flow diagram of first example operations occurring in a source eNB participating in determining uplink path loss according to example embodiments described herein;
Figure 6C illustrates a flow diagram of first example operations occurring in a target eNB participating in determining uplink path loss according to example embodiments described herein;
Figure 7A illustrates a flow diagram of second example operations occurring in a UE participating in determining uplink path loss according to example embodiments described herein;
Figure 7B illustrates a flow diagram of second example operations occurring in a source eNB participating in determining uplink path loss according to example embodiments described herein;
Figure 7C illustrates a flow diagram of second example operations occurring in a target eNB participating in determining uplink path loss according to example embodiments described herein;
Figure 8 illustrates a message exchange diagram of an example handover procedure, highlighting a determining of hybrid timing information according to example embodiments described herein;
Figure 9A illustrates a flow diagram of example operations occurring in a UE participating in determining hybrid timing information according to example embodiments described herein;
Figure 9B illustrates a flow diagram of example operations occurring in a source eNB participating in determining hybrid timing information according to example embodiments described herein;
Figure 9C illustrates a flow diagram of example operations occurring in a target eNB participating in determining hybrid timing information according to example embodiments described herein;
Figure 10 illustrates a block diagram of an embodiment processing system for performing methods described herein; and
Figure 11 illustrates a block diagram of a transceiver adapted to transmit and receive signaling over a telecommunications network according to example embodiments described herein.

### DETAILED DESCRIPTION OF illustrative embodiments

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the embodiments and ways to operate the embodiments disclosed herein, and do not limit the scope of the disclosure.

One embodiment relates to systems and methods for managing connections in a wireless communications system. For example, a user equipment receives first configuration information from a first communications controller for an initial uplink message transmitted by the user equipment to a second communications controller, the first configuration information including a first uplink resource allocation indicator indicating a first uplink resource and a transmit power indicator indicating a transmit power level, and transmits the initial uplink message in accordance with the first configuration information.

The embodiments will be described with respect to example embodiments in a specific context, namely communications systems that manage connections for devices operating in the communications system. The embodiments may be applied to standards compliant communications systems, such as those that are compliant with Third Generation Partnership Project (3GPP), IEEE 802.11, and the like, technical standards, and non-standards compliant communications systems, that manage connections for devices operating in the communications system.

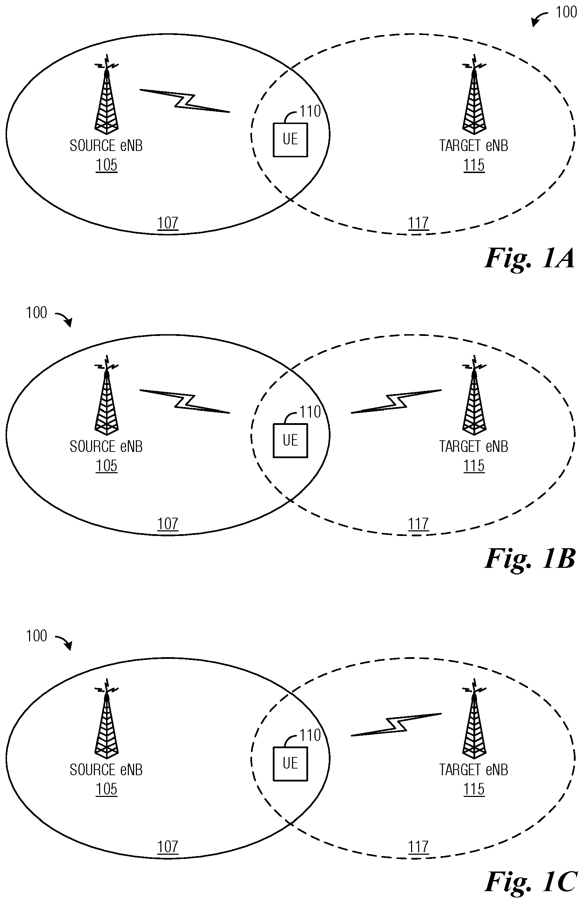

Figure 1A illustrates an example wireless communications system 100. Wireless communications system 100 includes a plurality of evolved NodeBs (eNBs), such as eNB 105 and eNB 115. Each of the eNBs has a coverage area, such as coverage area 107 for eNB 105 and coverage area 117 for eNB 115. The eNBs may serve one or more user equipments (UEs), such as UE 110. eNBs may also be commonly referred to as NodeBs, base stations (BSs), access points (APs), and the like, while UEs may also be commonly referred to as users, terminals, subscribers, mobiles, mobile stations (MSs), stations, and so on. While it is understood that communications systems may employ multiple eNBs capable of communicating with a number of UEs, only two eNBs, and a single UE are illustrated for simplicity.

In serving the UEs, the eNBs allocate network resources for transmissions to or from the UEs, as well as provide connectivity support to the UEs. In other words, the eNBs provide connection management support for the UEs. As an illustrative example, when a UE initially powers on in a coverage area of an eNB, the eNB helps the UE to establish a connection with the eNB. As an another illustrative example, in a handover, when a UE moves away from a coverage area of a first eNB and enters a coverage area of a second eNB, both the first eNB and the second eNB help the UE to establish a connection with the second eNB and break the connection with the first eNB (if needed).

Figure 1A illustrates an initial stage of a handover. As shown in Figure 1A, UE 110 is in both coverage area 107 and coverage area 117 with a connection with eNB 105. However, if UE 110 continues to move away from eNB 105 and towards eNB 115, the quality of the connection with eNB 105 will decrease. At some point, in order to maintain service, a handover has to be performed to establish a connection for UE 110 with eNB 115. Figure 1B illustrates an intermediate stage of a handover in wireless communications system 100. In the intermediate stage of the handover, connections between UE 110 and both eNB 105 and eNB 115 exist. Such a situation may exist when UE 110 is be located in a position in wireless communications system 100 such that that both connections are maintainable. Alternatively, Figure 1B illustrates a situation after the connection between UE 110 and eNB 115 has been established but before the connection between UE 110 and eNB 105 has been torn down. Figure 1C illustrates a final stage of a handover in wireless communications system 100. As shown in Figure 1C, UE 110 is served only by eNB 115.

Another scenario where a connection may be established for a UE is in a dual connectivity deployment. In dual connectivity, a UE may have a connection(s) with a macro eNB(s) that is part of a planned infrastructure, as well as a connection(s) with a low power eNB(s) that is part of a small cell deployment. An example of a planned infrastructure is a cellular communications system, such as a 3GPP LTE compliant communications system, while an example of a small cell deployment includes hot spots deployed by infrastructure providers or users to help improve coverage or performance. A backhaul connects the macro eNBs and the low power eNBs.

As an illustrative example, a UE has a connection with a macro eNB and when it moves within a coverage area of a low power eNB, a connection with the low power eNB is added while maintaining the connection with the macro eNB. As another illustrative example, a UE has a connection with a macro eNB and a first low power eNB, then as the UE moves about, a new connection is added with a second low power eNB while the connection with the first low power eNB is torn down. As yet another illustrative example, a UE has a connection with a macro eNB, and then as the UE moves about and exits the coverage area of the macro eNB but enters a coverage area of a low power eNB, a connection with the low power eNB is established while the connection with the macro eNB is torn down.

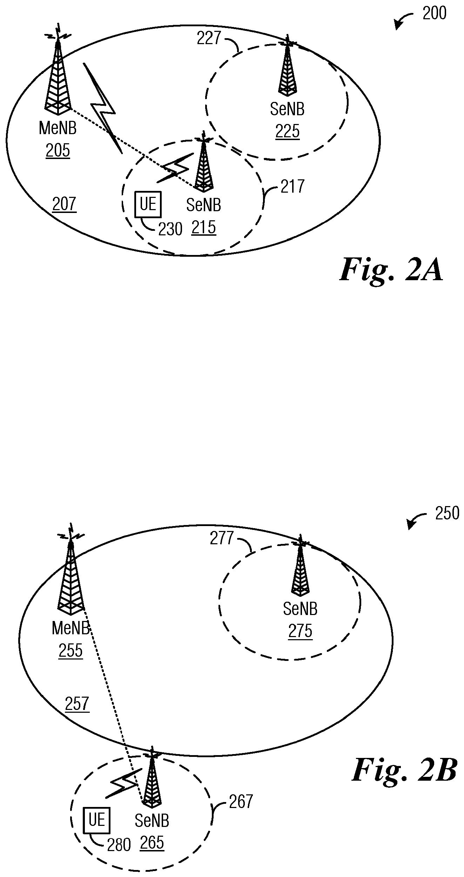

Figure 2A illustrates a first example wireless communications system 200 highlighting dual connectivity. Wireless communications system 200 includes a macro eNB 205, which is referred to as a master eNB (MeNB) when discussing dual connectivity, and a first low power eNB 215, which is referred to as a secondary eNB (SeNB) when discussing dual connectivity, and a second low power eNB 225, which is referred to as another SeNB when discussing dual connectivity. Macro eNB 205, first low power eNB 215, and second low power eNB 225 have coverage areas 207, 217, and 227, respectively. As shown in Figure 2A, a UE 230 is located in coverage area 217 and has dual connectivity through a connection with macro eNB (also referred to as MeNB) 205 and first low power eNB (also referred to as SeNB) 215.

Figure 2B illustrates a second example wireless communications system 250 highlighting dual connectivity. Wireless communications system 250 includes a macro eNB 255, as well as a first low power eNB 265 and a second low power eNB 275. As shown in Figure 2B, a UE 280 is located in coverage area 267 and has connectivity with first low power eNB (also referred to as SeNB) 265. Although UE 280 has a single connection, if UE 280 was to move back into coverage area 257, a connection with macro eNB 255 may be established.

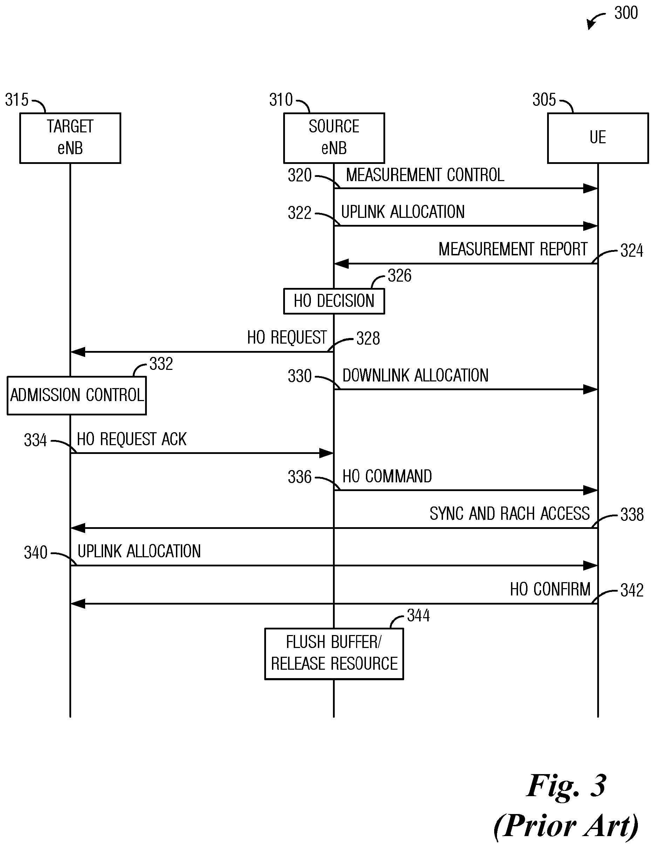

Figure 3 illustrates a message exchange diagram 300 of a prior art handover procedure. Message exchange diagram 300 illustrates operations occurring in and messages exchanged between a UE 305, a source eNB 310, and a target eNB 315 in a handover procedure. Source eNB 310, which is currently serving UE 305, sends a measurement control message to UE 305 (event 320) to initiate a reference signal measurement by UE 305. Source eNB 310 also allocates an uplink allocation and sends information regarding the uplink allocation to UE 305 (event 322). The uplink allocation may be for a network resource to allow UE 305 to send a measurement report to source eNB 310. UE 305 sends a measurement report to source eNB 310 (event 324). From the measurement report received from UE 305, source eNB 310 makes a handover decision (block 326). As an example, source eNB 310 evaluates the reference signal measurement from UE 305 to determine if a handover is warranted.

For discussion purposes, consider a situation wherein source eNB 310 determines that a handover procedure is warranted and determines to initiate a handover for UE 305 to target eNB 315. Source eNB 310 sends a handover request message to target eNB 315 (event 328). Source eNB 310 also allocates a downlink resource for UE 305 and send information regarding the downlink allocation to UE 305 (event 330). The downlink allocation may be used to send a handover command to UE 305. Target eNB 315 evaluates the handover request to determine if it will participate in the handover procedure, the evaluation is referred to as admission control (block 332). Target eNB 315 responds with a handover request acknowledge (event 334). For discussion purposes, assume that target eNB 315 agrees to participate in the handover procedure. Because target eNB 315 agreed to participate in the handover procedure, source eNB 310 sends a handover command to UE 305 to initiate the handover (event 336).

UE 305 sends a message in a physical uplink shared channel (PUSCH) to initiate a random access channel (RACH) procedure (event 338). The RACH procedure includes an uplink synchronization to obtain a timing advance (TA). The uplink synchronization may allow UE 305 to become synchronized with target eNB 315, while the exchange of messages in the RACH procedure may determine a transmit power level of UE 305. Target eNB 315 responds by allocating an uplink resource for UE 305 and sending information regarding the uplink resource to UE 305 (event 340). UE 305 responds with an uplink transmission to target eNB 315 to confirm completion of the handover (event 342). Source eNB 310 flushes its buffers and releases resources related to the connection with UE 305 (block 344).

According to an example embodiment, in some situations, it is possible to omit a TA procedure without losing uplink synchronization. Omitting the TA procedure helps to reduce latency involved in establishing a connection. There may be many reasons for omitting the TA procedure, they include: If source and target eNBs are synchronized, the TA procedure may not be needed because the UE is able to adjust autonomously; If coverage area of the target eNB is sufficiently small, a TA procedure is not needed relative to the downlink of the target eNB. The delay spread for uplink transmissions within the target eNB's coverage area is so short (due to the small size of the coverage area of the target eNB) that reception of the uplink transmissions of the UE is not impaired; If the combination of the downlink delay spread within the target eNB and the uplink TA between the eNBs is within the guard time (e.g., the uplink TA is within the cyclic prefix in orthogonal frequency division multiplexing (OFDM) communications systems), no TA is needed.

According to an example embodiment, a target eNB specifies an uplink resource and an uplink transmit power level for the UE to use in an initial uplink transmission of the handover procedure. The target eNB specifying the uplink resource and the uplink transmit power eliminates the target eNB and the UE from having to participate in procedures to determine the uplink transmit power level for the uplink transmission of the UE as well as the uplink resource, thereby reducing the latency associated with establishing a connection.

Although the discussion presented below focuses on example embodiments to reduce latency in a handover procedure, the example embodiments are also operable in reducing latency involved with connection management procedures in general communications systems and dual connectivity communications systems. The example embodiments apply to connection management in general communications systems and dual connectivity communications system, including connecting to a SeNB, as well as handover between SeNBs. Therefore, the discussion of example embodiments to reduce latency involving handovers should not be construed as being limiting to either the scope or spirit of the example embodiments.

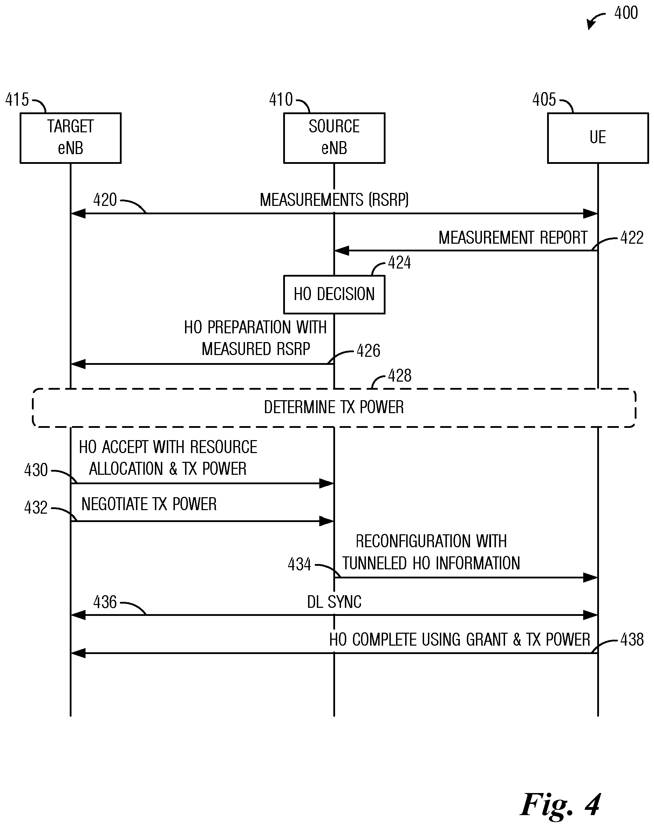

Figure 4 illustrates a message exchange diagram 400 of an example handover procedure, highlighting latency reducing techniques. Message exchange diagram 400 illustrates operations occurring in and messages exchanged between a UE 405, a source eNB 410, and a target eNB 415 in a handover procedure. UE 405, source eNB 410, and target eNB 415 participate in making measurements (event 420). As an illustrative example, source eNB 410 and target eNB 415 may transmit reference signals that are measured by UE 405. UE 405 sends measurement reports for the measurements that it made to source eNB 410 (event 422). As an example, UE 405 may report reference signal received power (RSRP) measurements to source eNB 410. From the measurement report received from UE 405, source eNB 410 makes a handover decision (block 424). As an example, source eNB 410 evaluates the reference signal measurement report from UE 405 to determine if a handover is warranted.

For discussion purposes, consider a situation wherein source eNB 410 determines that a handover procedure is warranted and determines to initiate a handover for UE 405 to target eNB 415. Source eNB 410 sends a handover request message with the RSRP measurements reported by UE 405 to target eNB 415 (event 426).

In order for target eNB 415 to specify the transmit power level for an uplink transmission made by UE 405 to the target eNB, target eNB 405 may need to know a variety of values, including the uplink path loss between UE 405 and target eNB 415, previously applied transmit power control (TPC) commands, and so on. Conventionally, these parameters would be determined during a RACH procedure between UE 405 and target eNB 415. In the absence of such a RACH procedure, however, target eNB 415 may be able to determine the transmit power level for UE 405 by participating with UE 405, and source eNB 410 in determining the transmit power level for UE 405 (block 428).

According to an example embodiment, target eNB 415 sets the transmit power level for UE 405 based on a downlink path loss observed by UE 405 between target eNB 415 and UE 405. The measurement reports provided by UE 405 in event 422 and forwarded to target eNB 415 in the handover request message (event 426) include the downlink path loss for UE 405. Target eNB 415 may set the transmit power level for UE 405 based on the downlink path loss. As an illustrative example, utilizing channel reciprocity, target eNB 415 may specify the transmit power level for UE 405 as a sum of a desired receive power level plus the downlink path loss. Alternatively, target eNB 415 may specify the transmit power level for UE 405 as a sum of a desired receive power level plus a function of the downlink path loss, where the function may be scaling, multiplying, addition, subtraction, and so on.

According to an example embodiment, target eNB 415, source eNB 410, and UE 405 participate in a measurement procedure to determine the transmit power level for UE 405. As an illustrative example, source eNB 410 configures UE 405 to make an uplink transmission of a known signal (such as a sounding reference signal (SRS), or some other signal known by involved devices) at a known transmit power. Source eNB 410 also allocates a resource for UE 405 to make the uplink transmission and indicates the allocated resource to both UE 405 and target eNB 415. UE 405 then transmits the known signal at the resource and target eNB 415 makes a measurement. From the measurement, target eNB 415 is able to determine the uplink path loss between itself and UE 405. Therefore, target eNB 415 may specify the transmit power level for UE 405 in accordance with the uplink path loss between target eNB 415 and UE 405. As an illustrative example, target eNB 415 may specify the transmit power level for UE 405 as a sum of a desired receive power level plus the uplink path loss. Alternatively, target eNB 415 may specify the transmit power level for UE 405 as a sum of a desired receive power level plus a function of the downlink path loss, where the function may be scaling, multiplying, addition, subtraction, and so on.

According to an example embodiment, both the uplink path loss and the downlink path loss are used together. The downlink path loss may be used to provide a baseline estimate of the transmit power level. The uplink path loss may be used to make the estimate of the transmit power level more accurate in situations where there is imbalance in the channel.

In addition to specifying the transmit power level of UE 405, target eNB 415 also allocates a resource for an uplink transmission made by UE 405. The uplink transmission made by UE 405 may indicate completion of the handover procedure. Target eNB 415 sends a handover accept message to source eNB 410 (event 430). The handover accept message includes the transmit power level and information about the allocated resource for the uplink transmission made by UE 405. It is noted that the transmit power level as included in the handover accept message may not actually be in the form of a transmit power level. Instead, the transmit power level may be specified in the form of a transmit power parameter, e.g., an index into a table of transmit power level values or a numerical value that may be used as an input into a function that determines the actual transmit power level. As an illustrative example, if there are 10 possible transmit power level values and if target eNB 415 specifies that UE 405 use the second transmit power level value, the transmit power parameter may be set to 2 to indicate to UE 405 to use the second transmit power level value. In other words, the handover accept message includes an indicator of the transmit power level for the uplink transmission made by UE 405.

Target eNB 415 and source eNB 410 may negotiate with one another regarding the transmit power level (event 432). Because the transmit power level is visible to source eNB 410 and because the uplink transmission from UE 405 to target eNB 415 will appear as interference to source eNB 410, source eNB 410 and target eNB 415 may negotiate the transmit power level. The negotiation may take place if source eNB 410 determines if the transmit power level specified by target eNB 415 is too low or too high, for example. As an illustrative example, if source eNB 410 determines that the transmit power level is too high and would potentially cause unnecessary interference, source eNB 410 and target eNB 415 may negotiate to reduce the transmit power level. As another illustrative example, source eNB 410 sets a ceiling on permissible transmit power level and if the transmit power level exceeds the ceiling, source eNB 410 negotiates with target eNB 415 to reduce the transmit power level. As an alternative to negotiation, because source eNB 410 knows the allocated resource, source eNB 410 may vacate its own resources that would collide with the uplink transmission.

Source eNB 410 sends a reconfiguration message to UE 405 (event 434). The reconfiguration message includes information regarding the handover. As an illustrative example, the information includes the information related to the allocated resource, as well as the transmit power level (or an indicator thereof) for the uplink transmission. The transmit power level is the transmit power level as specified by target eNB 415. If target eNB 415 and source eNB 410 negotiated the transmit power level, the transmit power level is the negotiated transmit power level.

UE 405 and target eNB 415 exchange messages to synchronize in the downlink (event 436). As an illustrative example, target eNB 415 transmits a synchronization reference signal that UE 405 detects to obtain timing information for synchronization purposes. UE 405 sends an uplink transmission (event 438). The uplink transmission is sent in the resource allocated by target eNB 415 and at the transmit power level specified by target eNB 415 (or negotiated by target eNB 415 and source eNB 410 in event 432). The uplink transmission may serve to indicate that the handover is complete.

The uplink transmission by UE 405 may fail. UE 405 may be able to detect failure of the uplink transmission if hybrid automatic repeat request (HARQ) operation is enabled for the uplink transmission. If UE 405 detects that the uplink transmission failed, UE 405 may attempt to retransmit the uplink transmission. Alternatively, if UE 405 detects that uplink transmission failed, a normal handover procedure with RACH operation, such as one shown in Figure 3, with contention may be performed.

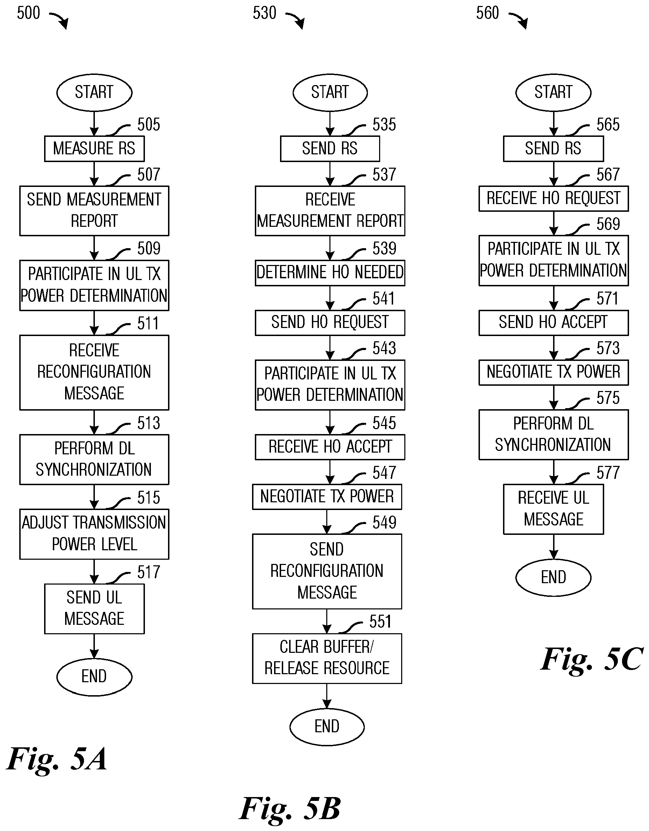

Figure 5A illustrates a flow diagram of example operations 500 occurring in a UE as the UE participates in a handover operation. Operations 500 may be indicative of operations occurring in a UE as the UE participates in a handover operation.

Operations 500 begin with the UE measuring reference signals (block 505). The reference signals may be transmitted by a source eNB and a target eNB. The measurement of the reference signals may be part of a procedure to measure the quality of channels between the UE and the source eNB and the target eNB. The UE sends a measurement report to the target eNB (block 507). The measurement report may include RSRPs measured in accordance with the reference signals received from the source eNB and the target eNB.

The UE participates in the determination of an uplink transmit power level (block 509). In accordance with an example embodiment, the measurements that the UE made of the reference signals transmitted by the source eNB and the target eNB may be used to determine the uplink transmit power level. In accordance with another example embodiment, the UE is configured to transmit a reference signal (such as a SRS) in an uplink resource allocated by the source eNB to allow the target eNB to measure the uplink path loss of the UE, which is used by the target eNB to determine the transmit power level for the UE.

The UE receives a reconfiguration message with handover information (block 511). The handover information may include information about a resource allocated for an uplink transmission by the UE and a transmit power level for the uplink transmission. The transmit power level may be specified by the target eNB or negotiated between the target eNB and the source eNB. The UE performs downlink synchronization with the target eNB (block 513). As an illustrative example, the UE detects a reference signal transmitted by the target eNB to obtain timing information. The UE may adjust the transmission power level (block 515). The UE may determine a downlink path loss and if the downlink path loss suggests a transmission power level different from the transmission power level received in the reconfiguration message, the UE selects a higher transmission power level of the two to maximize the probability of successful reception, for example. The UE sends the uplink message (block 517). The uplink message is sent in a resource as indicated in the reconfiguration message at at the transmission power level, as specified by the target eNB, negotiated by the target eNB and the source eNB, or adjusted by the UE.

Figure 5B illustrates a flow diagram of example operations 530 occurring in a source eNB as the source eNB participates in a handover operation. Operations 530 may be indicative of operations occurring in a source eNB as the source eNB participates in a handover operation.

Operations 530 begin with the source eNB sending a reference signal to assist a UE in measuring the quality of a channel between the source eNB and the UE (block 535). The source eNB receives a measurement report from the UE (block 537). The measurement report may include RSRPs measured by the UE of reference signals sent by the source eNB and potentially one or more target eNBs. The source eNB determines if a handover is warranted for the UE (block 539). As an illustrative example, the source eNB compares the RSRPs reported by the UE and if the RSRP associated with a target eNB is better than the RSRP associated with the source eNB, the source eNB determines that a handover is warranted for the UE.

If a handover is warranted, the source eNB sends a handover request to the target eNB (block 541). The handover request provides information to the target eNB that enables the target eNB to determine if it is to participate in the handover with the source eNB and the UE. As an example, the handover request includes the RSRPs reported by the UE. The source eNB, the target eNB, and the UE participate in determining the transmit power level for the UE (block 543). In accordance with an example embodiment, the measurements that the UE made of the reference signals transmitted by the source eNB and the target eNB may be used to determine the uplink transmit power level. In accordance with another example embodiment, the UE is configured to transmit a reference signal (such as a SRS) in an uplink resource allocated by the source eNB to allow the target eNB to measure the uplink path loss of the UE, which is used by the target eNB to determine the transmit power level for the UE.

If the target eNB accepts the handover request, the source eNB receives a handover accept message from the target eNB (block 545). The handover accept message includes information about a resource allocated by the target eNB for an uplink transmission sent by the UE to complete the handover procedure. The handover accept message also includes a transmit power level parameter for the uplink transmission sent by the UE. The transmit power level parameter indicates a transmit power level for the uplink transmission as specified by the target eNB. The source eNB and the target eNB may negotiate the transmit power level (block 547).

The source eNB sends a reconfiguration message to the UE (block 549). The reconfiguration message includes handover information, including the information regarding the resource allocated for the uplink transmission and the transmit power parameter. The source eNB clears buffers and releases resources associated with the UE (block 551).

Figure 5C illustrates a flow diagram of example operations 560 occurring in a target eNB as the target eNB participates in a handover operation. Operations 560 may be indicative of operations occurring in a target eNB as the target eNB participates in a handover operation.

Operations 560 begin with the target eNB sending a reference signal to assist a UE in measuring the quality of a channel between the target eNB and the UE (block 565). The target eNB receives a handover request from a source eNB (block 567). The handover request includes information to help the target eNB to determine if it is to participate in a handover with the source eNB and the UE. As an example, the handover request includes RSRPs reported by the UE. The target eNB, the source eNB, and the UE participate in determining the transmit power level for the UE (block 569). In accordance with an example embodiment, the measurements that the UE made of the reference signals transmitted by the source eNB and the target eNB may be used to determine the uplink transmit power level. In accordance with another example embodiment, the UE is configured to transmit a reference signal (such as a SRS) in an uplink resource allocated by the source eNB to allow the target eNB to measure the uplink path loss of the UE, which is used by the target eNB to determine the transmit power level for the UE.

If the target eNB accepts the handover request, the target eNB sends a handover accept message to the source eNB (block 571). The handover accept message includes information about a resource allocated by the target eNB for an uplink transmission sent by the UE to complete the handover procedure. The handover accept message also includes a transmit power level parameter for the uplink transmission sent by the UE. The transmit power level parameter indicates a transmit power level for the uplink transmission as specified by the target eNB. The target eNB and the source eNB may negotiate the transmit power level (block 573).

The target eNB and the UE perform downlink synchronization (block 575). As an illustrative example, the target eNB sends a reference signal to allow the UE to obtain timing information. The target eNB receives an uplink transmission from the UE (block 577). The uplink transmission occurs in the resource allocated by the target eNB. The uplink transmission may be at a transmit power level as specified, or at a transmit power level negotiated by the target eNB and the source eNB. Alternatively, the uplink transmission may be at a transmit power level adjusted by the UE in accordance with a downlink path loss determined by the UE.

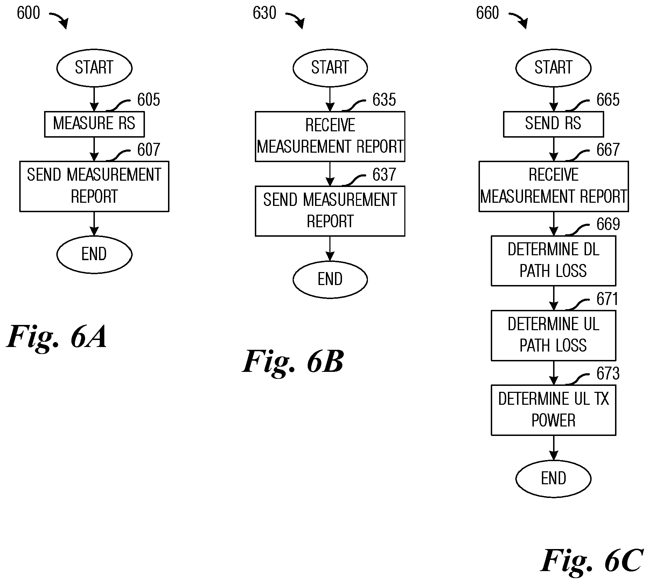

Figure 6A illustrates a flow diagram of first example operations 600 occurring in a UE participating in determining uplink path loss. Operations 600 may be indicative of operations occurring in a UE as the UE participates in determining uplink path loss based on downlink path loss measurements by the UE.

Operations 600 begin with the UE measuring a reference signal (block 605). Because the uplink path loss being determined is for a channel between a target eNB and the UE, the reference signal is received from the target eNB. The UE sends a measurement report (block 607). The measurement report may be sent to a source eNB because a connection may not yet exist between the target eNB and the UE. The measurement report may include RSRP reports.

Figure 6B illustrates a flow diagram of first example operations 630 occurring in a source eNB participating in determining uplink path loss. Operations 630 may be indicative of operations occurring in a source eNB as the source eNB participates in determining uplink path loss based on downlink path loss measurements by a UE.

Operations 630 begin with the source eNB receiving a measurement report (block 635). The measurement report may include RSRP reports of a downlink measurement made by a UE in accordance with a reference signal sent by a target eNB. The source eNB sends the measurement report (block 637). The source eNB may send the measurement report to the target eNB. Alternatively, the source eNB may send the RSRP reports included in the measurement report to the target eNB.

Figure 6C illustrates a flow diagram of first example operations 660 occurring in a target eNB participating in determining uplink path loss. Operations 660 may be indicative of operations occurring in a target eNB as the target eNB participates in determining uplink path loss based on downlink path loss measurements by a UE.

Operations 660 begin with the target eNB sending a reference signal (block 665). The reference signal may be sent by the target eNB to assist the UE in measuring a channel between the target eNB and the UE. The target eNB receives a measurement report (block 667). The measurement report may be received from a source eNB, which received the measurement report from the UE. Alternatively, instead of the measurement report, the target eNB receives RSRP reports from the source eNB, which originally received the RSRP reports from the UE.

Because the target eNB knows the transmit power level used to send the reference signal, the target eNB determines the downlink path loss (block 669). As an illustrative example, the downlink path loss is a difference between the transmit power level of the reference signal and the RSRP reports. The target eNB determines the uplink path loss from the downlink path loss (block 671). In a TDD communications system, the uplink path loss may be considered to be equal to the downlink path loss because the same channel is used. Furthermore, in a FDD communications system, a good estimate of the uplink path loss may be the downlink path loss because path loss in the two channels may be equal if the two channels are not too far apart in frequency. The target eNB determines the transmit power level in accordance with the uplink path loss (block 673). As an illustrative example, the transmit power level is equal a summation of an intended receive power level and the uplink path loss. As an alternative illustrative example, the transmit power level is equal a summation of an intended receive power level and function of the uplink path loss.

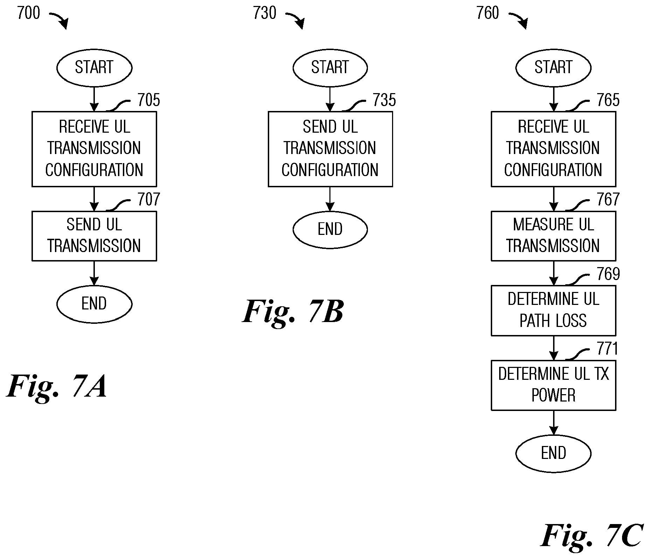

Figure 7A illustrates a flow diagram of second example operations 700 occurring in a UE participating in determining uplink path loss. Operations 700 may be indicative of operations occurring in a UE as the UE participates in determining uplink path loss based on uplink transmissions made by the UE.

Operations 700 begin with the UE receiving an uplink transmission configuration (block 705). The uplink transmission configuration may be received from a source eNB. The uplink transmission configuration may include information regarding an uplink transmission to be made by the UE to assist a target eNB determine the uplink path loss of a channel between the UE and the target eNB. The uplink transmission configuration may include a resource, a transmit power level, a signal to transmit, MCS level, and so on. Examples of the signal to transmit include a SRS or some other known sequence. The UE sends the signal (block 707). The signal is sent by the UE at the resource.

Figure 7B illustrates a flow diagram of second example operations 730 occurring in a source eNB participating in determining uplink path loss. Operations 730 may be indicative of operations occurring in a source eNB as the source eNB participates in determining uplink path loss based on uplink transmissions made by a UE.

Operations 730 begin with the source eNB sending an uplink transmission configuration (block 735). The uplink transmission configuration may be sent to both the UE and a target eNB. The uplink transmission configuration may include information regarding an uplink transmission to be made by the UE to assist a target eNB determine the uplink path loss of a channel between the UE and the target eNB. The uplink transmission configuration may include a resource, a transmit power level, a signal to transmit, MCS level, and so on. Examples of the signal to transmit include a SRS or some other known sequence.

Figure 7C illustrates a flow diagram of second example operations 760 occurring in a target eNB participating in determining uplink path loss. Operations 760 may be indicative of operations occurring in a target eNB as the target eNB participates in determining uplink path loss based on uplink transmissions made by a UE.

Operations 760 begin with the target eNB receiving an uplink transmission configuration (block 765). The uplink transmission configuration may be received from a source eNB. The uplink transmission configuration may include information regarding an uplink transmission to be made by the UE to assist the target eNB determine the uplink path loss of a channel between the UE and the target eNB. The target eNB measures the uplink transmission (block 767). The target eNB measures the uplink transmission at the resource specified by the uplink transmission configuration. The target eNB determines the uplink path loss (block 769). Because the target eNB knows the transmit power level of the UE, the target eNB may be able to determine the uplink path loss based on the signal power of the received signal and the transmit power level. As an illustrative example, the uplink path loss is equal to a difference between the transmit power level and the signal power of the received signal. As an alternative illustrative example, the uplink path loss is equal to a difference between the transmit power level and a function (e.g., a scaling, a multiplying, a dividing, an adding, a subtracting, and the like) of the signal power of the received signal. The target eNB determines the transmit power level (block 771). The target eNB may determine the transmit power level in accordance with an intended receive power level and the uplink path loss.

According to an example embodiment, a technique for obtaining timing information in a RACH-less handover procedure is provided. The example embodiments discussed previously have omitted the TA procedure, which is permissible under a number of conditions, such as synchronized networks, small coverage areas, short delay spread, and so on. However, if those conditions or other similar conditions are not met, timing information may be required to make sure that the UE is synchronized with the target eNB.

According to an example embodiment, the target eNB obtains hybrid timing information for the UE relative to the current timing of the UE. The hybrid timing information is provided to the UE to help the UE synchronize with the target eNB, such as during downlink synchronization.

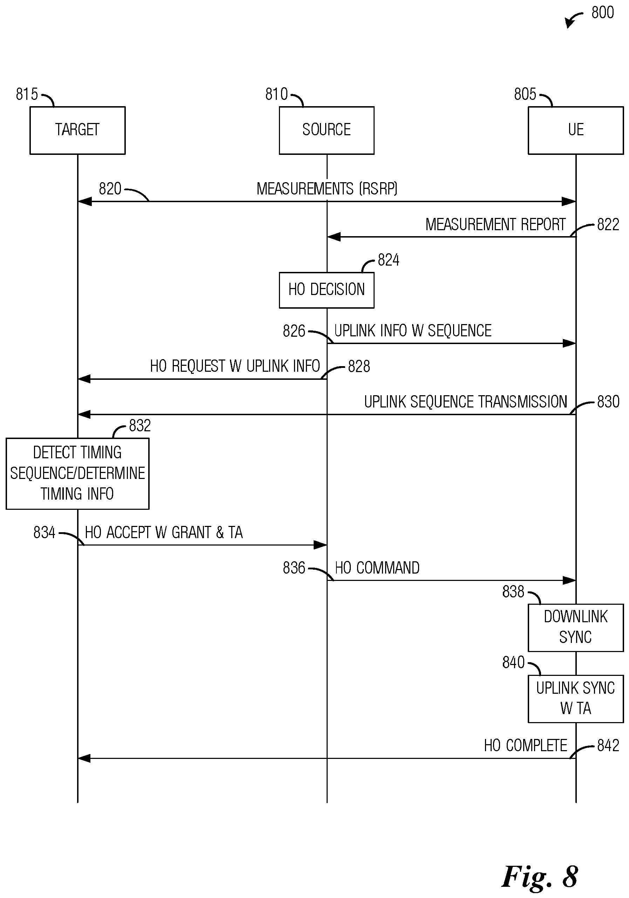

Figure 8 illustrates a message exchange diagram 800 of an example handover procedure, highlighting a determining of hybrid timing information. Message exchange diagram 800 illustrates operations occurring in and messages exchanged between a UE 805, a source eNB 810, and a target eNB 815 in a handover procedure. UE 805, source eNB 810, and target eNB 815 participate in making measurements (event 820). As an illustrative example, source eNB 810 and target eNB 815 may transmit reference signals that are measured by UE 805. UE 805 sends measurement reports for the measurements that it made to source eNB 810 (event 822). As an example, UE 805 may report RSRP measurements to source eNB 810. From the measurement report received from UE 805, source eNB 810 makes a handover decision (block 824). As an example, source eNB 810 evaluates the reference signal measurement from UE 805 to determine if a handover is warranted.

If source eNB 810 determines that a handover procedure is warranted, source eNB 810 sends a message to initiate the determining of hybrid timing information (event 826). The message is sent to UE 805. The message may include information about an uplink transmission, such as a resource where the uplink transmission is to take place, as well as information about a sequence being transmitted. The sequence being transmitted should be known by both the transmitter (UE 805) and recipient (target eNB 815) and should be optimized for timing detection, such as sequences that are spread across multiple time to transmit intervals (TTI). A SRS may not be a suitable candidate, for example, since the SRS is concentrated in a single TTI. Source eNB 810 also sends a handover request message (event 828). The handover request message is sent to target eNB 815 and may include the information about the uplink transmission. The handover request message may also include the measurement reports provided by UE 805. UE 805 sends the sequence as specified in the uplink (event 830). Target eNB 815 detects and receives the sequence, as well as determines the hybrid timing information for UE 805 in accordance with the sequence (block 832).

Target eNB 815 sends a handover accept message to source eNB 810 (event 834). The handover accept message includes the hybrid timing information for UE 805. The handover accept message also includes the transmit power level and information about the allocated resource for the uplink transmission made by UE 805. Source eNB 810 sends a handover command to UE 805 (event 836). The handover command includes the hybrid timing information, as well as the transmit power level and information about the allocated resource for the uplink transmission. UE 805 performs performs downlink synchronization with target eNB 815 (block 838). UE 805 performs uplink synchronization in accordance with the hybrid timing information (block 840). UE 805 sends an uplink transmission (event 842). The uplink transmission is sent in the resource allocated by target eNB 815 and at the transmit power level specified by target eNB 815 (or negotiated by target eNB 815 and source eNB 810, or adjusted by UE 805). The uplink transmission may serve to indicate that the handover is complete.

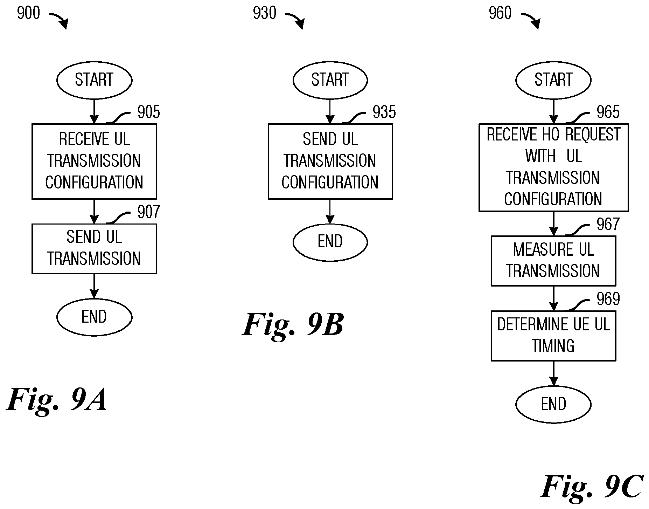

Figure 9A illustrates a flow diagram of example operations 900 occurring in a UE participating in determining hybrid timing information. Operations 900 may be indicative of operations occurring in a UE as the UE participates in determining hybrid timing information.

Operations 900 begin with the UE receiving a message initiating the determining of hybrid timing information (block 905). The message may include information about an uplink transmission, such as a resource where the uplink transmission is to take place, as well as information about a sequence being transmitted. The UE sends the sequence (block 907). The sequence may be sent in the resource as indicated in the message.

Figure 9B illustrates a flow diagram of example operations 930 occurring in a source eNB participating in determining hybrid timing information. Operations 930 may be indicative of operations occurring in a source eNB as the source eNB participates in determining hybrid timing information.

Operations 930 begin with the source eNB sending a message initiating the determining of hybrid timing information (block 935). The message may be sent to the UE. The message may include information about an uplink transmission, such as a resource where the uplink transmission is to take place, as well as information about a sequence being transmitted.

Figure 9C illustrates a flow diagram of example operations 960 occurring in a target eNB participating in determining hybrid timing information. Operations 960 may be indicative of operations occurring in a target eNB as the target eNB participates in determining hybrid timing information.

Operations 960 begin with the target eNB receiving a handover request message (block 965). The handover request message may include the information about the uplink transmission made by a UE to allow the target eNB to determine the hybrid timing information, including a resource where the uplink transmission is to take place and the sequence being transmitted. The handover request message may also include measurement reports provided by UE. The target eNB measures the uplink transmission by the UE (block 967). The target eNB measures the sequence sent by the UE in the resource as specified in the information about the uplink transmission. The target eNB determines the hybrid timing information from the received sequence (block 969).

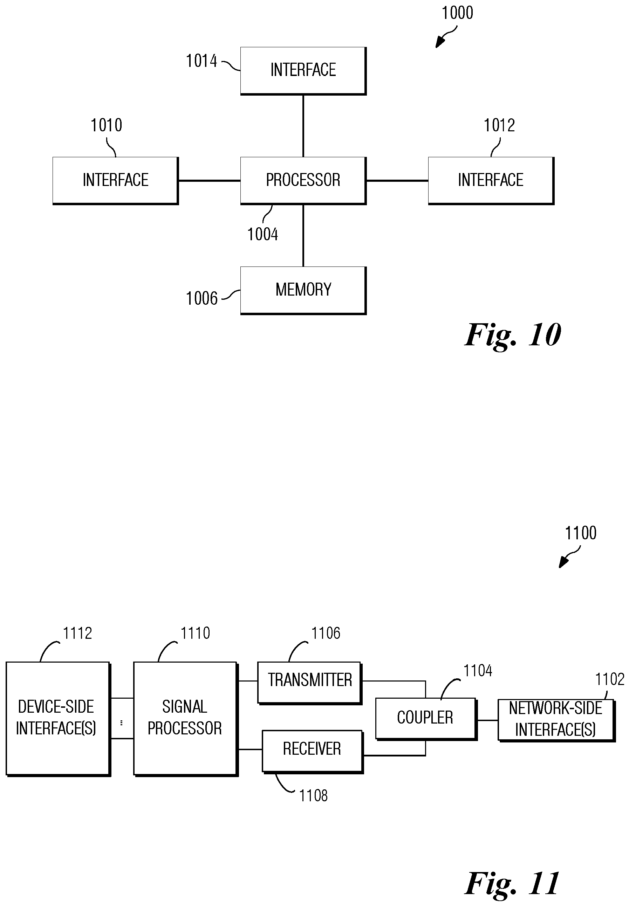

Figure 10 illustrates a block diagram of an embodiment processing system 1000 for performing methods described herein, which may be installed in a host device. As shown, the processing system 1000 includes a processor 1004, a memory 1006, and interfaces 1010-1014, which may (or may not) be arranged as shown in Figure 10. The processor 1004 may be any component or collection of components adapted to perform computations and/or other processing related tasks, and the memory 1006 may be any component or collection of components adapted to store programming and/or instructions for execution by the processor 1004. In an embodiment, the memory 1006 includes a non-transitory computer readable medium. The interfaces 1010, 1012, 1014 may be any component or collection of components that allow the processing system 1000 to communicate with other devices/components and/or a user. For example, one or more of the interfaces 1010, 1012, 1014 may be adapted to communicate data, control, or management messages from the processor 1004 to applications installed on the host device and/or a remote device. As another example, one or more of the interfaces 1010, 1012, 1014 may be adapted to allow a user or user device (e.g., personal computer (PC), etc.) to interact/communicate with the processing system 1000. The processing system 1000 may include additional components not depicted in Figure 10, such as long term storage (e.g., non-volatile memory, etc.).

In some embodiments, the processing system 1000 is included in a network device that is accessing, or part otherwise of, a telecommunications network. In one example, the processing system 1000 is in a network-side device in a wireless or wireline telecommunications network, such as a base station, a relay station, a scheduler, a controller, a gateway, a router, an applications server, or any other device in the telecommunications network. In other embodiments, the processing system 1000 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 1010, 1012, 1014 connects the processing system 1000 to a transceiver adapted to transmit and receive signaling over the telecommunications network. Figure 11 illustrates a block diagram of a transceiver 1100 adapted to transmit and receive signaling over a telecommunications network. The transceiver 1100 may be installed in a host device. As shown, the transceiver 1100 comprises a network-side interface 1102, a coupler 1104, a transmitter 1106, a receiver 1108, a signal processor 1110, and a device-side interface 1112. The network-side interface 1102 may include any component or collection of components adapted to transmit or receive signaling over a wireless or wireline telecommunications network. The coupler 1104 may include any component or collection of components adapted to facilitate bidirectional communication over the network-side interface 1102. The transmitter 1106 may include any component or collection of components (e.g., up-converter, power amplifier, etc.) adapted to convert a baseband signal into a modulated carrier signal suitable for transmission over the network-side interface 1102. The receiver 1108 may include any component or collection of components (e.g., down-converter, low noise amplifier, etc.) adapted to convert a carrier signal received over the network-side interface 1102 into a baseband signal. The signal processor 1110 may include any component or collection of components adapted to convert a baseband signal into a data signal suitable for communication over the device-side interface(s) 1112, or vice-versa. The device-side interface(s) 1112 may include any component or collection of components adapted to communicate data-signals between the signal processor 1110 and components within the host device (e.g., the processing system 1000, local area network (LAN) ports, etc.).

The transceiver 1100 may transmit and receive signaling over any type of communications medium. In some embodiments, the transceiver 1100 transmits and receives signaling over a wireless medium. For example, the transceiver 1100 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1102 comprises one or more antenna/radiating elements. For example, the network-side interface 1102 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1100 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

Although the present disclosure and its advantages have been described in detail, it should be understood that various changes, substitutions and alterations can be made herein without departing from the scope of the disclosure as defined by the appended claims.

## Claims

1. A method for digital communications, the method comprising:
receiving (705), by a user equipment, UE, first configuration information for an initial uplink message transmitted by the UE to a second communications controller, the first configuration information including a first uplink resource allocation indicator indicating a first uplink resource and a transmit power indicator indicating a transmit power level, the first configuration information received from a first communications controller; and
transmitting (707), by the UE, the initial uplink message in accordance with the first configuration information,
further comprising the step of:
participating, by the UE, in a determination of the transmit power indicator; and
**characterized in:**
receiving (826), by the UE, second configuration information for an uplink measurement sequence transmission; and
transmitting (830), by the UE, to the second communication controller, a timing sequence in accordance with the second configuration information for the uplink measurement sequence transmission.

2. The method of claim 1, further comprising:
measuring, by the UE, a downlink path loss for a channel between the second communications controller and the UE; and
adjusting, by the UE, a transmit power level for the initial uplink message in accordance with the downlink path loss and the first configuration information.

3. The method of claim 1, further comprising:
performing, by the UE, downlink synchronization with the second communications controller prior to transmitting the initial uplink message.

4. The method of claim 1, further comprising:
participating, by the UE, in a determination of hybrid timing information prior to receiving the first configuration information.

5. The method of claim 4, wherein participating in the determination of the hybrid timing information comprises:
receiving, by the UE, third configuration information from the first communications controller for an uplink timing message transmitted by the UE, the third configuration information including a second uplink resource allocation indicator and a timing sequence indicator; and
transmitting, by the UE, a timing sequence in accordance with the third configuration information.

6. The method of claim 4, wherein the first configuration information further comprises the hybrid timing information, and wherein the method further comprises:
adjusting, by the UE, a timing advance in accordance with the hybrid timing information; and
performing, by the UE, downlink synchronization with the second communications controller prior to transmitting the initial uplink message.

7. The method of claim 1, wherein the first communications controller is a source evolved NodeB, eNB, and the second communications controller is a target eNB, and wherein the initial uplink message is transmitted on a physical uplink shared channel, PUSCH, as part of a handover procedure; or
wherein first communications controller is a master evolved NodeB, MeNB, and the second communications controller is a secondary evolved NodeB, SeNB, and wherein the UE, MeNB, and SeNB are part of a dual connectivity communications system.

8. A method for digital communications, the method comprising:
determining (832), by a second communications controller, a resource allocation and a transmit power level for an initial uplink transmission;
**characterized in:**
transmitting (834), by the second communications controller, a message including information about the resource allocation and the transmit power level to a first communications controller;
receiving (842), by the second communications controller, the initial uplink transmission in accordance with the resource allocation and the transmit power level from a user equipment;
determining (832), by the second communications controller, hybrid timing information in accordance with a timing sequence received (830) from the user equipment; and
transmitting (834), by the second communications controller, the hybrid timing information to the first communications controller.

9. The method of claim 8, wherein determining the transmit power level comprises:
determining, by the second communications controller, the transmit power level from a downlink channel received power report.

10. The method of claim 8, wherein determining the transmit power level comprises:
measuring, by the second communications controller, an uplink channel in accordance with received reference signal from the user equipment;
determining, by the second communications controller, an uplink path loss in accordance with the measured uplink channel; and
determining, by the second communications controller, the transmit power level in accordance with the uplink path loss.

11. A user equipment, UE, adapted to digitally communicate, the UE comprising:
a processor; and
a computer readable storage medium storing programming for execution by the processor, the programming including instructions to configure the UE to perform the method of any one of claims 1-7.

12. A second communications controller adapted to digitally communicate, the first communications controller comprising:
a processor; and
a computer readable storage medium storing programming for execution by the processor, the programming including instructions to configure the second communications controller to perform the method of any one of claims 8-10.

## Patentansprüche

1. Verfahren für digitale Kommunikation, wobei das Verfahren Folgendes umfasst:
Empfangen (705), durch ein Benutzergerät (UE), von ersten Konfigurationsinformationen für eine anfängliche Uplink-Meldung, die von dem UE an einen zweiten Kommunikations-Controller übertragen wird, wobei die ersten Konfigurationsinformationen einen ersten Uplink-Ressourcen-Zuordnungsindikator, der eine erste Uplink-Ressource angibt, und einen Sendeleistungsindikator, der einen Sendeleistungspegel angibt, enthalten, wobei die ersten Konfigurationsinformationen von einem ersten Kommunikations-Controller empfangen werden; und
Übertragen (707), durch das UE, der anfänglichen Uplink-Meldung in Übereinstimmung mit den ersten Konfigurationsinformationen,
ferner den folgenden Schritt umfassend:
Teilnehmen, durch das UE, an einer Bestimmung des Sendeleistungsindikators; und
**gekennzeichnet durch** Folgendes:
Empfangen (826), durch das UE, von zweiten Konfigurationsinformationen für eine Uplink-Messungssequenzübertragung; und
Übertragen (830), durch das UE, an den zweiten Kommunikations-Controller, einer Timing-Sequenz in Übereinstimmung mit den zweiten Konfigurationsinformationen für die Uplink-Messungssequenzübertragung.

2. Verfahren nach Anspruch 1, das ferner Folgendes umfasst:
Messen, durch das UE, eines Downlink-Pfadverlustes für einen Kanal zwischen dem zweiten Kommunikations-Controller und dem UE; und
Einstellen, durch das UE, eines Sendeleistungspegels für die anfängliche Uplink-Meldung in Übereinstimmung mit dem Downlink-Pfadverlust und den ersten Konfigurationsinformationen.

3. Verfahren nach Anspruch 1, das ferner Folgendes umfasst:
Durchführen, durch das UE, einer Downlink-Synchronisation mit dem zweiten Kommunikations-Controller vor dem Übertragen der anfänglichen Uplink-Meldung.

4. Verfahren nach Anspruch 1, das ferner Folgendes umfasst:
Teilnehmen, durch das UE, an einer Bestimmung von Hybrid-Timing-Informationen vor dem Empfangen der ersten Konfigurationsinformationen.

5. Verfahren nach Anspruch 4, wobei das Teilnehmen an der Bestimmung der Hybrid-Timing-Informationen Folgendes umfasst:
Empfangen, durch das UE, von dritten Konfigurationsinformationen von dem ersten Kommunikations-Controller für eine von dem UE gesendete Uplink-Timing-Meldung, wobei die dritten Konfigurationsinformationen einen zweiten Uplink-Ressourcenzuweisungsindikator und einen Timing-Sequenzindikator enthalten; und
Senden, durch das UE, einer Timing-Sequenz in Übereinstimmung mit den dritten Konfigurationsinformationen.

6. Verfahren nach Anspruch 4, wobei die ersten Konfigurationsinformationen ferner die Hybrid-Timing-Informationen umfassen, und wobei das Verfahren ferner Folgendes umfasst:
Einstellen, durch das UE, einer Timing-Vorverlegung in Übereinstimmung mit den Hybrid-Timing-Informationen; und
Durchführen, durch das UE, einer Downlink-Synchronisation mit dem zweiten Kommunikations-Controller vor dem Übertragen der anfänglichen Uplink-Meldung.

7. Verfahren nach Anspruch 1, wobei der erste Kommunikations-Controller ein "Source Evolved NodeB" (eNB) ist und der zweite Kommunikations-Controller ein Target eNB ist, und wobei die anfängliche Uplink-Meldung auf einem "Physical Uplink Shared Channel" (PUSCH) als Teil eines Handover-Verfahrens übertragen wird; oder wobei der erste Kommunikations-Controller ein "Master Evolved NodeB" (MeNB) ist und der zweite Kommunikations-Controller ein "Secondary Evolved NodeB" (SeNB) ist und wobei das UE, MeNB und SeNB Teil eines "Dual-Connectivity"-Kommunikationssystems sind.

8. Verfahren für digitale Kommunikation, wobei das Verfahren Folgendes umfasst:
Bestimmen (832), durch einen zweiten Kommunikations-Controller, einer Ressourcenzuweisung und eines Sendeleistungspegels für eine anfängliche Uplink-Übertragung;
**gekennzeichnet durch** Folgendes:
Übertragen (834), durch den zweiten Kommunikations-Controller, einer Meldung, die Informationen über die Ressourcenzuweisung und den Sendeleistungspegel enthält, an einen ersten Kommunikations-Controller;
Empfangen (842), durch den zweiten Kommunikations-Controller, der anfänglichen Uplink-Übertragung in Übereinstimmung mit der Ressourcenzuweisung und dem Sendeleistungspegel von einem Benutzergerät;
Bestimmen (832), durch den zweiten Kommunikations-Controller, von Hybrid-Timing-Informationen in Übereinstimmung mit einer Timing-Sequenz, die von dem Benutzergerät empfangen wurde (830); und
Übertragen (834), durch den zweiten Kommunikations-Controller, der Hybrid-Timing-Informationen an den ersten Kommunikations-Controller.

9. Verfahren nach Anspruch 8, wobei das Bestimmen des Sendeleistungspegels Folgendes umfasst:
Bestimmen, durch den zweiten Kommunikations-Controller, des Sendeleistungspegels aus einem empfangenen Leistungsbericht des Downlink-Kanals.

10. Verfahren nach Anspruch 8, wobei das Bestimmen des Sendeleistungspegels Folgendes umfasst:
Messen, durch den zweiten Kommunikations-Controller, eines Uplink-Kanals in Übereinstimmung mit dem empfangenen Referenzsignal vom Benutzergerät;
Bestimmen, durch den zweiten Kommunikations-Controller, eines Uplink-Pfadverlustes in Übereinstimmung mit dem gemessenen Uplink-Kanal; und
Bestimmen, durch den zweiten Kommunikations-Controller, des Sendeleistungspegels in Übereinstimmung mit dem Uplink-Pfadverlust.

11. Benutzergerät (UE), das eingerichtet ist, digital zu kommunizieren, wobei das UE Folgendes umfasst:
einen Prozessor; und
ein computerlesbares Speichermedium, das eine Programmierung zur Ausführung durch den Prozessor speichert, wobei die Programmierung Anweisungen enthält, um das UE so zu konfigurieren, dass es das Verfahren nach einem der Ansprüche 1-7 durchfuhrt.

12. Zweiter Kommunikations-Controller, der zum digitalen Kommunizieren eingerichtet ist, wobei der erste Kommunikations-Controller Folgendes umfasst:
einen Prozessor; und
ein computerlesbares Speichermedium, das eine Programmierung zur Ausführung durch den Prozessor speichert, wobei die Programmierung Anweisungen enthält, um den zweiten Kommunikations-Controller so zu konfigurieren, dass er das Verfahren nach einem der Ansprüche 8-10 durchführt.

## Revendications

1. Procédé de communications numériques, le procédé comprenant :
la réception (705), par un équipement d'utilisateur, UE, de premières informations de configuration pour un message de liaison montante initial transmis par l'UE à un second contrôleur de communications, les premières informations de configuration comprenant un premier indicateur d'attribution de ressources de liaison montante indiquant une première ressource de liaison montante et un indicateur de puissance de transmission indiquant un niveau de puissance de transmission, les premières informations de configuration étant reçues en provenance d'un premier contrôleur de communications ; et
la transmission (707), par l'UE, du message de liaison montante initial en fonction des premières informations de configuration,
comprenant en outre l'étape de :
participation, par l'UE, à une détermination de l'indicateur de puissance de transmission ; et
**caractérisé par** :
la réception (826), par l'UE, de deuxièmes informations de configuration pour une transmission de séquence de mesure de liaison montante ; et
la transmission (830), par l'UE, au second contrôleur de communications, d'une séquence de synchronisation en fonction des deuxièmes informations de configuration pour la transmission de séquence de mesure de liaison montante.

2. Procédé selon la revendication 1, comprenant en outre :
la mesure, par l'UE, d'un affaiblissement sur le trajet de liaison descendante pour un canal entre le second contrôleur de communications et l'UE ; et
l'ajustement, par l'UE, d'un niveau de puissance de transmission pour le message de liaison montante initial en fonction de l'affaiblissement sur le trajet de liaison descendante et des premières informations de configuration.

3. Procédé selon la revendication 1, comprenant en outre :
la réalisation, par l'UE, d'une synchronisation de la liaison descendante avec le second contrôleur de communications avant la transmission du message de liaison montante initial.

4. Procédé selon la revendication 1, comprenant en outre :
la participation, par l'UE, à une détermination d'informations de synchronisation hybride avant la réception des premières informations de configuration.

5. Procédé selon la revendication 4, la participation à la détermination des informations de synchronisation hybride comprenant :
la réception, par l'UE, de troisièmes informations de configuration provenant du premier contrôleur de communications pour un message de synchronisation de liaison montante transmis par l'UE, les troisièmes informations de configuration comprenant un deuxième indicateur d'attribution de ressources de liaison montante et un indicateur de séquence de synchronisation ; et
la transmission, par l'UE, d'une séquence de synchronisation en fonction des troisièmes informations de configuration.

6. Procédé selon la revendication 4, les premières informations de configuration comprenant en outre les informations de synchronisation hybride, et le procédé comprenant en outre :
l'ajustement, par l'UE, d'une avance de synchronisation en fonction des informations de synchronisation hybride ; et
la réalisation, par l'UE, d'une synchronisation de liaison descendante avec le second contrôleur de communications avant la transmission du message de liaison montante initial.

7. Procédé selon la revendication 1, le premier contrôleur de communications étant un nœud B évolué source, eNB, et le second contrôleur de communications étant un eNB cible, et le message de liaison montante initial étant transmis sur un canal physique partagé de liaison montante, PUSCH, dans le cadre d'une procédure de transfert ; ou le premier contrôleur de communications étant un nœud B évolué maître, MeNB, et le second contrôleur de communications étant un nœud B évolué secondaire, SeNB, et les UE, MeNB, et SeNB faisant partie d'un système de communications à double connectivité.

8. Procédé de communications numériques, le procédé comprenant :
la détermination (832), par un second contrôleur de communications, d'une attribution de ressources et d'un niveau de puissance de transmission pour une transmission initiale en liaison montante ;
**caractérisé par** :
la transmission (834), par le second contrôleur de communications, d'un message comprenant des informations sur l'attribution de ressources et le niveau de puissance de transmission à un premier contrôleur de communications ;
la réception (842), par le second contrôleur de communications, de la transmission de liaison montante initiale en fonction de l'attribution de ressources et du niveau de puissance de transmission à partir d'un équipement d'utilisateur ;
la détermination (832), par le second contrôleur de communications, d'informations de synchronisation hybride en fonction d'une séquence de synchronisation reçue (830) en provenance de l'équipement utilisateur ; et
la transmission (834), par le second contrôleur de communications, des informations de synchronisation hybride au premier contrôleur de communications.

9. Procédé selon la revendication 8, la détermination du niveau de puissance de transmission comprenant :
la détermination, par le second contrôleur de communications, du niveau de puissance de transmission à partir d'un rapport de puissance reçu sur le canal de liaison descendante.

10. Procédé selon la revendication 8, la détermination du niveau de puissance de transmission comprenant :
la mesure, par le second contrôleur de communications, d'un canal de liaison montante en fonction du signal de référence reçu en provenance de l'équipement utilisateur ;
la détermination, par le second contrôleur de communications, d'un affaiblissement sur le trajet de liaison montante en fonction du canal de liaison montante mesuré ; et
la détermination, par le second contrôleur de communications, du niveau de puissance de transmission en fonction de l'affaiblissement sur le trajet de liaison montante.

11. Équipement utilisateur, UE, adapté pour communiquer numériquement, l'UE comprenant :
un processeur ; et
un support de stockage lisible par ordinateur stockant une programmation pour une exécution par le processeur, la programmation comprenant des instructions pour configurer l'UE afin de réaliser le procédé selon l'une quelconque des revendications 1 à 7.

12. Second contrôleur de communications adapté pour communiquer numériquement, le premier contrôleur de communications comprenant :
un processeur ; et
un support de stockage lisible par ordinateur stockant une programmation destinée à être exécutée par le processeur, la programmation comprenant des instructions pour configurer le second contrôleur de communications afin de réaliser le procédé selon l'une quelconque des revendications 8 à 10.
